# EUROPÄISCHE PATENTSCHRIFT

(11) **EP 0 643 251 B1**
(45) Veröffentlichungstag und Bekanntmachung des Hinweises auf die Patenterteilung: **22.10.1997**
(21) Anmeldenummer: 94111483.7
(22) Anmeldetag: 22.07.1994
(51) Int. Cl.: F16L 47/06

(54) **Steckverbindung für Kunststoffrohre**
Spigot and socket connector for plastic pipes
Raccord à fiches pour tuyaux en matière plastique

(30) Priorität: 09.09.1993 DE 4330501
(43) Veröffentlichungstag der Anmeldung: 15.03.1995
(73) Patentinhaber: REHAU AG + Co, 95111 Rehau (DE)
(72) Erfinder: Elter, Max, c/o Rehau AG + Co, D-91058 Erlangen-Eltersdorf (DE); Baumgärtel, Christof, c/o Renau AG + Co, D-91058 Erlangen-Eltersdorf (DE); Suscher, Walter, c/o Renau Gesellschaft m.b.H., A-2353 Guntramsdorf (AT)

(56) Entgegenhaltungen:
- AT-B- 340 728
- GB-A- 1 032 350
- US-A- 3 368 830

## Beschreibung

Die Erfindung betrifft eine Steckverbindung für Kunststoffrohre, bei der das Spitzende des einen Rohres in das zu einer Verbindungsmuffe aufgeweitete Ende des anderen Rohres eingeschoben ist, wobei zwischen dem zylindrischen Rohrabschnitt und der Verbindungsmuffe am Muffenhals ein konischer Übergangsbereich angeformt ist, an dem die Stirnfläche des eingesteckten Spitzendes anliegt, und wobei die Dichtung durch ein Dichtelement erfolgt, das in eine an der Verbindungsmuffe ausgebildete Umfangssicke eingelegt ist und sich unter Verformung dichtend einerseits an das Spitzende des eingesteckten Rohres anlegt und andererseits in die Umfangssicke eindrückt.

Ein gattungsgemäßes Rohr ist aus der Österreichischen Patentschrift 340 728 bekannt. Die dort beschriebene Rohrverbindung zeigt eine mit unterschiedlichen Durchmessern gestaltete Verbindungsmuffe. So verläuft der Bereich der Verbindungsmuffe, der sich vom freien Ende bis zur muffenendseitigen Flanke der Umfangssicke erstreckt, in zylindrischer Form, während der Verbindungsmuffenbereich von der muffenhalsseitigen Flanke der Umfangssicke ausgehend bis zum Muffenhals in eine konische Verjüngung der Verbindungsmuffe erfolgt. Der vordere, zylindrische Bereich der Verbindungsmuffe ist im Durchmesser so groß gehalten, daß sich zwischen dem Spitzende des eingeschobenen Rohres und diesem Muffenbereich ein Spiel ergibt, während das Spitzende im hinteren Abschnitt der Verbindungsmuffe zum Muffenhals hin mit zunehmender Verjüngung kleiner gestaltet ist als der Außendurchmesser des Spitzendes.

Das bei dieser Steckverbindung vorgesehene Spiel zwischen dem Spitzende des einzuschiebenden Rohres und dem vor der Umfangssicke liegenden Muffenteil ermöglicht das Einschieben des Rohres in die Muffe bis zu dem in der Sicke eingelegten elastischen Dichtelement ohne Kraftanwendung. Erst in dem Muffenteil, dessen Innenwand ausgehend von der muffenhalsseitigen Flanke der Sicke eine konische Verjüngung aufweist, ist eine größere Kraftanwendung zur Beendigung des Einsteckvorgangs erforderlich. Es erfolgt dabei zwischen dem Spitzende und der Muffe eine Pressung, die von dem elastischen Dichtelement noch unterstützt wird.

Dieser erhöhte Kraftaufwand beim Herstellen der Muffenverbindung hat sich bei dem bekannten Stand der Technik als Nachteil herausgestellt. Als weiterer Nachteil dieses Standes der Technik ist die Verletzungsmöglichkeit des Kabels im Bereich der hergetellten Muffenverbindung anzusehen. Bei der bekannten Steckverbindung wird ein außen angefastes Steckende mit einem Anfaswinkel von ca. 15° eingeschoben. Der konische Übergangsbereich am Muffengrund wird ebenfalls mit einem Winkel von ca. 15° gestaltet und beim Einschieben des Spitzendes legt sich der Anfaswinkel an den konischen Übergangsbereich an, wobei das Spitzende in diesem Bereich durch die konische Ausführung des hinteren Muffenendes fixiert wird. Bei gerade verlegten Muffenverbindungen ist hierbei die Beschädigungsgefahr für ein eingezogenes Kabel gering. Ist die zusammengesteckte Muffe jedoch im Bogenbereich eingesetzt, was durch das Spiel im vorderen Muffenbereich zwischen Spitzende und Muffe und die Fixierung des Spitzendes im Muffengrund möglich ist, so kann das durch die äußere Anfasung relativ scharf ausgebildete Rohrende in den Innenraum des Kabelschutzrohres im Bereich des Muffengrundes hineinragen und dadurch zur Beschädigung beim Einziehen von Kabeln führen.

Hier setzt die Erfindung ein, die es sich zur Aufgabe gestellt hat, die geschilderten Nachteile zu vermeiden und eine Steckverbindung für Rohre, insbesondere auch für Kabelschutzrohre anzugeben, die eine leichte Steckbarkeit des Spitzendes in die Verbindungsmuffe bei Vermeidung einer Verletzungsgefahr für einzuziehende Kabel zuläßt. Erfindungsgemäß wird dazu vorgeschlagen, daß in den konischen Übergangsbereich zwischen dem zylindrischen Rohrabschnitt und der Verbindungsmuffe wenigstens eine von außen nach innen gerichtete Anschlagnocke eingeprägt ist, welche wenigstens eine gegen die Einschubrichtung des Spitzendes gerichtete, senkrecht zur Rohrachse gestellte Anlagefläche für die Stirnfläche des eingeschobenen Spitzendes aufweist.

Die Höhe der Anlagefläche entspricht dabei dem Durchmesserunterschied zwischen der Muffenaufweitung und dem zylindrischen Rohrabschnitt, an dem die Muffe angeformt ist.

Die Anschlagnocken sind vorteilhaft gleichmäßig auf den Umfang des konischen Übergangsbereiches zwischen der Muffenaufweitung und dem zylindrischen Rohrabschnitt verteilt. Ferner hat es sich als zweckmäßig herausgestellt, daß das Spitzende des eingeschobenen Rohres eine Innenanfasung von ca. 15° aufweist.

Die Anschlagnocken werden von außen in den konischen Übergangsbereich eingepresst. Dieser Pressvorgang kann zusammen mit dem Anformen der Muffe erfolgen, so daß hier keine weiteren Gerätschaften und zusätzliche Arbeitsabläufe erforderlich sind.

Die erfindungsgemäße Innenanfasung des Spitzendes verhindert auch eine Beschädigung des Kabels beim Einzug in das Kabelschutzrohr. Bei einem Einsatz der erfindungsgemäßen Steckverbindung im Biegebereich ragt nämlich an der Bogeninnenseite nicht die scharfe Kante des nach dem Stand der Technik außen angefasten Rohres in das Rohrlumen, sondern die erfindungsgemäße Innenanfasung des Rohrsteckendes bewirkt auch im Biegebereich, daß keine scharfen Kanten des Spitzendes in das Rohrlumen hineinragen. Dadurch wird jegliche Beschädigung des Kabels beim Einzug in das Kabelschutzrohr vermieden.

Es hat sich als zweckmäßig herausgestellt, daß das für die erfindungsgemäße Steckverbindung verwendete Dichtelement ein asymmetrischer Lippendichtring ist, dessen in den lichten Rohrdurchmesser ragender Lippenteil zum Muffenende hin ausgerichtet ist. Dadurch ergibt sich die Möglichkeit, daß die Lippe beim Einschieben des Spitzendes nach hinten zum Muffengrund hin umgelegt werden kann. Die Dichtwirkung zwischen Verbindungsmuffe und eingeschobenem Spitzende wird dadurch verstärkt. Schließlich hat es sich als vorteilhaft erwiesen, daß die Umfangssicke in den Mittelbereich der Verbindungsmuffe gelegt ist. Dadurch wird die Umfangssicke aus dem Bereich der höchsten mechanischen Beanspruchung am Muffenhals in Richtung zum Muffenende hin verschoben.

In der Zeichnung ist ein Ausführungsbeispiel der erfindungsgemäßen Steckverbindung schematisch dargestellt; es zeigt:
Fig.1 die Verbindungsmuffe im Teilschnitt mit eingestecktem Spitzende
Fig.2 die Verbindungsmuffe in isometrischer Darstellung.

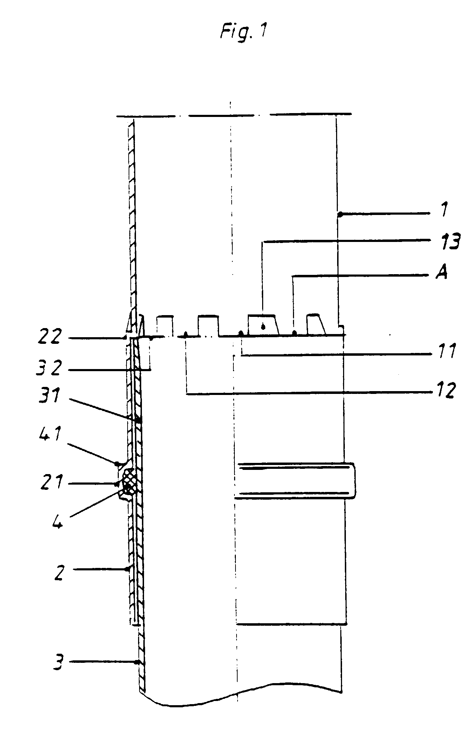

In Fig.1 ist die an dem zylindrischen Rohr 1 angeformte Steckmuffe 2 dargestellt. In die Steckmuffe 2 ist das Spitzende 31 des Folgerohres 3 eingesteckt.

Im Teilschnitt durch den oberen Bereich der Verbindungsmuffe 2 ist der in der Sicke 21 eingesetzte Lippendichtring 4 zu erkennen. Die Lippe 41 des Lippendichtrings 4 ist durch das Spitzende 31 in Richtung zum Muffenende 22 umgelegt.

Die Stirnfläche 32 des Spitzendes 31 stößt in der gezeigten Darstellung an die Anschlagnocken 11, 12 an, die aus dem konischen Übergangsbereich 13 zwischen der Verbindungsmuffe 2 und dem zylindrischen Rohrabschnitt 1 ausgebildet ist.

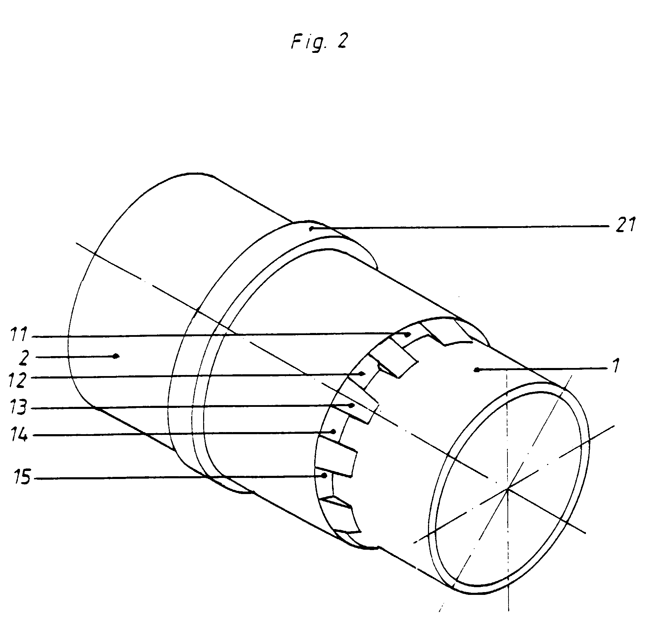

Die isometrische Darstellung in Fig.2 zeigt die Verbindungsmuffe 2 mit der Umfangssicke 21 und dem konischen Verbindungsbereich 13 zwischen dem Zylinder der Verbindungsmuffe 2 und dem zylindrischen Rohrabschnitt 1.

In den konischen Übergangsbereich 13 sind Anschlagnocken 11, 12, 14, 15 eingepresst. Die Anlageflächen dieser Anschlagnocken bilden gegen die Einschubrichtung des Spitzendes 31 gerichtete, senkrecht zur Rohrachse verlaufende Anschläge für die Stirnfläche 32 des eingeschobenen Spitzendes 31 (Fig.1).

## Patentansprüche

1. Steckverbindung für Kunststoffrohre bei der das Spitzende des einen Rohres in das zu einer Verbindungsmuffe aufgeweitete Ende des anderen Rohres eingeschoben ist, wobei zwischen dem zylindrischen Rohrabschnitt und der Verbindungsmuffe am Muffenhals ein konischer Übergangsbereich angeformt ist, wobei die Dichtung durch ein Dichtelement erfolgt, das in eine an der Verbindungsmuffe ausgebildete Umfangssicke eingelegt ist und sich unter Verformung dichtend einerseits an das Spitzende des eingesteckten Rohres anlegt und andererseits in die Umfangssicke eindrückt, und wobei in den konischen Übergangsbereich (13) zwischen dem zylindrischen Rohrabschnitt (1) und der Verbindungsmuffe (2) wenigstens eine von außen nach innen gerichtete Anschlagnocke (11) eingeprägt ist, welche wenigstens eine gegen die Einschubrichtung des Spitzendes (31) gerichtete, senkrecht zur Rohrachse gestellte Anlagefläche für die Stirnfläche (32) des eingeschobenen Spitzendes (31) aufweist.

2. Steckverbindung nach Anspruch 1, dadurch gekennzeichnet, daß die Höhe der Anlagefläche dem Durchmesserunterschied zwischen der lichten Weite der Verbindungsmuffe (2) und der lichten Weite des zylindrischen Rohrabschnitts (1) entspricht.

3. Steckverbindung nach Ansprüchen 1 und 2, dadurch gekennzeichnet, daß die Anschlagnocken (11, 12, 14, 15) gleichmäßig auf dem Umfang des konischen Übergangsbereiches (13) verteilt sind.

4. Steckverbindung nach Anspruch 1, dadurch gekennzeichnet, daß das Spitzende (31) des eingeschobenen Rohres (3) eine Innenanfasung von 15° aufweist.

5. Steckverbindung nach Anspruch 1, dadurch gekennzeichnet, daß das Dichtelement ein asymmetrischer Lippendichtring (4) ist, dessen in den lichten Durchmesser der Verbindungsmuffe (2) ragender Lippenteil (41) zum Muffenende hin ausgerichtet ist.

6. Steckverbindung nach Anspruch 1, dadurch gekennzeichnet, daß die Umfangssicke (21) in den Mittelbereich der Verbindungsmuffe (2) gelegt ist.

## Claims

1. Push-fit joint for plastic pipes whereby the spigot end of the one pipe is pushed into the end of the other pipe expanded into a sleeve, with the sleeve neck between the cylindrical pipe section and the joint sleeve featuring an integral tapered transitional section against which rests the end face of the inserted spigot, and sealing being accomplished by means of a sealing element that is inserted into a bead extending around the circumference of the joint sleeve and which on the one hand forms a seal against the spigot of the inserted pipe and on the other hand presses into the circumferential bead, characterised by the fact that the tapered transitional section (13) between the cylindrical pipe section (1) and the joint sleeve (2) features at least one embossed, inwardly facing stop zone (A) which, perpendicular to the pipe axis, exhibits at least one contact face pointing away from the direction of insertion of the spigot (31) for the end face (32) of the inserted spigot (31).

2. Push-fit joint as claimed in claim 1, characterised by the fact that the height of the contact face corresponds to the difference in diameter between the inside width of the joint sleeve (2) and the inside width of the cylindrical pipe section (1).

3. Push-fit joint as claimed in claims 1 and 2, characterised by the fact that the stop zone comprises stop cams (11, 12, 14, 15) which are distributed evenly throughout the circumference of the tapered transitional section (13).

4. Push-fit joint as claimed in claim 1, characterised by the fact that the spigot (31) of the inserted pipe (3) exhibits an internal bevel of 15°.

5. Push-fit joint as claimed in claim 1, characterised by the fact that the sealing element is an asymmetrical lipped sealing ring (4), the lipped section (41) of which projects into the inside diameter of the joint sleeve (2) and points towards the sleeve end.

6. Push-fit joint as claimed in claim 1, characterised by the fact that the circumferential bead (21) extends around the central section of the joint sleeve (2).

## Revendications

1. Connecteur enfichable pour conduit en plastique dans lequel l'extrémité en pointe dudit conduit est insérée dans l'extrémité évasée, avec un manchon de raccordement, de l'autre conduit, où une zone de transition conique est formée entre la section cylindrique du conduit et le manchon de raccordement sur le col du manchon, zone sur laquelle repose la surface frontale de l'extrémité en pointe insérée et où l'étanchéité est assurée par un élément étanche, qui est logé dans une moulure périphérique formée dans le manchon de raccordement et qui se place d'une part par déformation et de manière étanche sur l'extrémité en pointe du conduit inséré et est poussé d'autre part dans la moulure périphérique, caractérisé en ce que dans la zone de transition conique (13) entre la section cylindrique du conduit (1) et le manchon de raccordement (2) se trouve au moins une zone de butée (A) dirigée de l'extérieur vers l'intérieur, présentant au moins une surface de contact allant à l'encontre de la direction d'insertion de l'extrémité en pointe (31), perpendiculairement à l'axe du conduit, pour la surface frontale (32) de l'extrémité en pointe (31) insérée.

2. Connecteur enfichable selon la revendication 1, caractérisé en ce que la hauteur de la surface de contact correspond à la différence de diamètre entre l'ouverture du manchon de raccordement (2) et l'ouverture de la section cylindrique du conduit (1).

3. Connecteur enfichable selon les revendications 1 et 2, caractérisé en ce que la zone de butée se compose de cames de butée (11, 12, 14, 15), qui sont réparties de manière homogène sur la circonférence de la zone de transition conique (13).

4. Connecteur enfichable selon la revendication 1, caractérisé en ce que l'extrémité en pointe (31) du conduit inséré (3) présente un biseau interne de 15°.

5. Connecteur enfichable selon la revendication 1, caractérisé en ce que l'élément d'étanchéité est une bague à lèvres asymétrique (4), dont les lèvres (41) s'élevant dans le diamètre de l'ouverture du manchon de raccordement (2) partent de l'extrémité du manchon.

6. Connecteur enfichable selon la revendication 1, caractérisé en ce que la moulure périphérique (21) se trouve dans la partie centrale du manchon de raccordement (2).
